# DEMANDE DE BREVET EUROPEEN

(11) **EP 1 211 039 A1**
(43) Date de publication de la demande: **05.06.2002**
(21) Numéro de dépôt: 01402984.7
(22) Date de dépôt: 21.11.2001
(51) Int. Cl.: B29C 45/14

(54) **Procédé d'intégration d'un rebord dans une pièce thermoplastique**

(30) Priorité: 21.11.2000 FR 0015012
(71) Demandeur: Möllertech S.A.S., 91370 Verrières le Buisson (FR)
(72) Inventeur: Boulbon, Jack, 36130 Deols (FR)
(74) Mandataire: Viard, Jean

(57) **Abrégé**

Procédé d'intégration des rebords dans une pièce thermoplastique (4) au cours du moulage de ladite pièce sur un décor (3) tendu dans la matrice (11) du moule, la matière plastique injectée passant localement à travers le décor lors de l'injection caractérisé en ce qu'au moins une rainure ou cavité est prévue dans la matrice (11) pour recevoir la matière après passage à travers le décor (3) qui forme ainsi un bourrelet (2), en saillie par rapport à la pièce, entourant partiellement ou totalement la pièce ou un ajour formé dans une pièce.

## Description

La présente invention a pour objet un procédé d'intégration d'un insert ou rebord plastique dans une pièce décorée selon le procédé ISD d'Injection, Surmoulage, Décor, ainsi que les pièces obtenues selon le procédé.

Traditionnellement, les inserts nécessaires à des fins techniques ou esthétiques sont rapportés sur le décor ou la pièce par vissage, collage, clippage ou autre moyen de solidarisation. Mais ceci nécessite des opérations supplémentaires coûteuses.

Dans le cas des pièces revêtues d'un décor, textile ou autre, par la technologie ISD, il est possible d'obtenir des pièces décorées directement, par surmoulage du décor sur la pièce en une seule opération (one shot). Une telle technique est décrite, par exemple dans FR-A-2 708 512 au nom de la demanderesse.

Les pièces ainsi décorées pour des raisons esthétiques ou de confort doivent parfois, pour des raisons techniques, résister au frottement. Par exemple, dans le cas d'une ceinture de sécurité, il est nécessaire de prévoir une pièce rapportée en plastique à défaut de quoi le frottement de la ceinture viendrait lustrer puis user le décor dans cette zone déterminée.

Un premier objet de l'invention est de pallier cet inconvénient et de permettre l'intégration de rebords plastiques lors de la mise en oeuvre du procédé ISD, évitant la nécessité de rapporter des pièces.

Selon l'invention, le procédé d'intégration d'inserts plastiques au cours du moulage de ladite pièce sur un décor tendu dans la matrice du moule, la matière plastique injectée passant localement à travers le décor lors de l'injection est caractérisé en ce qu'au moins une rainure ou cavité est prévue dans le poinçon pour recevoir la matière après passage à travers le décor qui forme ainsi un bourrelet, rebord, lèvre ou jonc en saillie par rapport à la pièce, entourant partiellement ou totalement la pièce ou un ajour formé dans la pièce.

Il est ainsi possible d'obtenir en une seule opération, non seulement une pièce d'ébénisterie automobile revêtue d'un décor mais dans certaines régions de laquelle font saillie des rebords de matière plastique. Ces rebords peuvent contribuer soit à la décoration de la carrosserie, soit répondre à un problème technique d'usure.

D'autres caractéristiques et avantages de l'invention apparaîtront au cours de la description qui va suivre d'un mode particulier de réalisation, donné uniquement à titre d'exemple non limitatif, en regard des dessins qui représentent :
- la figure 1, une vue de face d'un insert constituant un bourrelet périphérique;
- la figure 2, une vue de face d'un insert constituant un bourrelet local;
- la figure 3, une vue en coupe selon la ligne III-III de pièce de la figure 2 à l'intérieur d'un moule;
- la figure 4, une vue à échelle agrandie de la partie insert à l'intérieur du moule;
- la figure 5, une vue en coupe d'un moule constituant un rebord;
- la figure 6, une vue par-dessus de la pièce obtenue dans le moule de la figure 4.

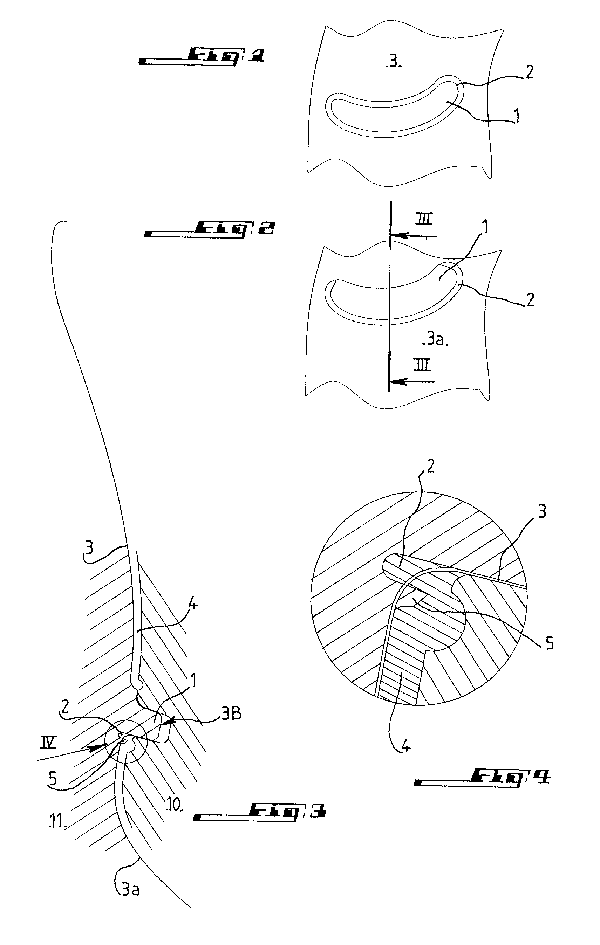

Sur la figure 1, on voit que l'ajour 1 formé dans la carrosserie revêtue d'un décor 3 est entouré par une lèvre ou bourrelet périphérique en saillie 2. Cet exemple est plus particulièrement destiné aux reliefs de décoration.

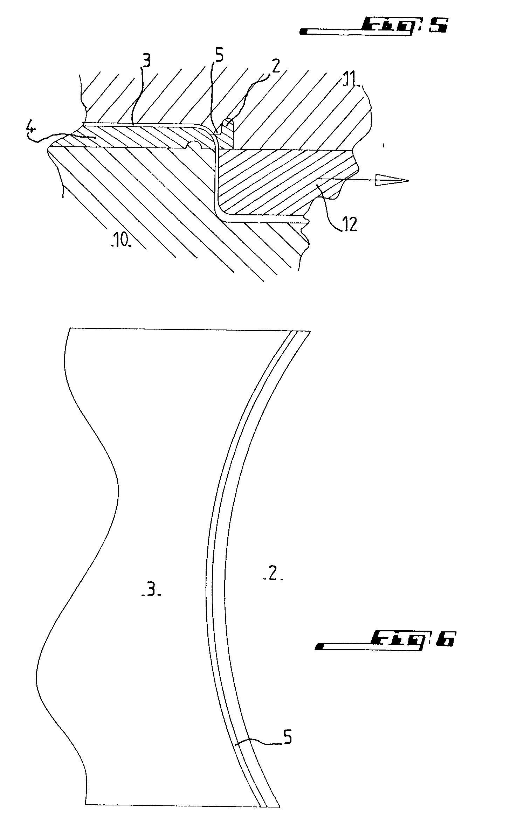

Sur la figure 2, la lèvre ou bourrelet 2 n'entoure que partiellement l'ajour 1. Elle a pour but, par exemple de protéger la zone inférieure 3a du frottement d'une sangle (non représentée).

La lèvre de la figure 2 est obtenue dans un moule tel que celui qui est représenté partiellement sur la figure 3. Traditionnellement le moule comprend un poinçon ou piston 10 et une cavité ou matrice 11. Lorsque le moule est fermé, il subsiste un espace entre le poinçon et la matrice dans lequel est injectée, à basse pression, la matière plastique de la pièce 4 et, conformément à la technologie ISD, le décor 3 est disposé et tendu, avant l'injection, contre la face interne de la matrice 11. La matrice présente une saillie destinée à constituer l'ajour 1. Au-dessous de cette saillie est prévue dans le piston 10 une cavité dans laquelle est moulée la lèvre ou bourrelet 2 à laquelle est juxtaposée une rainure 5.

Durant cette opération, le tissu ou plus généralement la partie 3B du décor 3 est tendue à l'intérieur de l'ajour 1. Dans le cas d'un usage décoratif, cette partie subsiste telle quelle. Dans le cas d'un usage technique, elle est découpée après démoulage suivant le profil de l'ajour 1.

Dans la lunette de la figure 4, représentant la zone de la lèvre 2 à échelle agrandie, on voit que celle-ci est obtenue par injection à travers le tissu. À cet effet, les points d'injection, dans le poinçon, (non représentés) sont disposés de sorte qu'il existe localement une augmentation de pression pour faire passer le plastique 4 à travers le décor 3.

Lorsque l'on veut former un rebord en matière plastique sur une pièce décorée ISD, Il est possible d'utiliser le procédé de moulage représenté schématiquement sur la figure 4. On retrouve sur cette figure le piston 10 et la matrice 11 entre lesquels est injectée la matière plastique 4 au-dessous du décor 3. Pour obtenir le résultat désiré, on prévoit un tiroir 12 coulissant permettant de tendre le décor 3 durant l'injection afin que la géométrie du bord soit parfaitement conservée. Comme précédemment, une rainure 5 est formée derrière le rebord ou lèvre 2. La matière injectée passe à travers le décor pour constituer le rebord 2.

Après injection, le tiroir 12 est déplacé vers la droite de la figure ce qui permet le démoulage de la pièce en libérant le décor 3 dont l'excédent est coupé.

La figure 5 est une vue par-dessus de la pièce sur laquelle on retrouve le rebord 2, la rainure 5 et le décor 3 se trouvant sur la pièce plastique 4, le bord du décor étant inclus dans la rainure 5..

La présente invention permet donc de réaliser en une seule opération une pièce décorée présentant un ou des rebords en saillie sans pièce rapportée, pour des besoins de design ou de résistance mécanique.

Il va de soi que de nombreuses variantes peuvent être apportées, notamment par substitution de moyens techniques équivalents, sans sortir pour cela du cadre de l'invention. En particulier, les fonctions du poinçon et de la matrice peuvent être inversés.

## Revendications

1. Procédé d'intégration d'inserts dans une pièce thermoplastique (4) au cours du moulage de ladite pièce sur un décor (3) tendu dans la matrice (11) du moule, la matière plastique injectée passant localement à travers le décor lors de l'injection **caractérisé en ce qu'**au moins une rainure ou cavité est prévue dans le poinçon (10) pour recevoir la matière après passage à travers le décor (3) qui forme ainsi un bourrelet (2), en saillie par rapport à la pièce, entourant partiellement ou totalement la pièce ou un ajour formé dans la pièce.

2. Procédé selon la revendication 1, **caractérisé en ce qu'**un jonc est prévu dans la matrice (11) au voisinage de l'ajour (1) pour former une rainure (5) le long du bourrelet en saillie (2).

3. Pièce décorée obtenue par le procédé selon l'une quelconque des revendications précédentes.
